(19) Europäisches Patentamt
European Patent Office
Office européen des brevets

(11) **EP 3 587 480 A2**

(12) **EUROPÄISCHE PATENTANMELDUNG**

(43) Veröffentlichungstag:
**01.01.2020   Patentblatt 2020/01**

(51) Int Cl.:
***C08J 7/04*** *(2006.01)*        ***B44C 1/17*** *(2006.01)*

(21) Anmeldenummer: **19160783.7**

(22) Anmeldetag: **05.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **13.03.2018   DE 102018105735**

(71) Anmelder: **Mitsubishi Polyester Film GmbH**
**65203 Wiesbaden (DE)**

(72) Erfinder:
 • **Kolar, Petr**
   **65760 Eschborn (DE)**

 • **Lohre, Claudia**
   **65195 Wiesbaden (DE)**
 • **Ünker, Yavuz**
   **55268 Nieder-Olm (DE)**
 • **Konrad, Matthias**
   **65830 Kriftel (DE)**
 • **Bartsch, Stefan**
   **55294 Bodenheim (DE)**

(74) Vertreter: **Schweitzer, Klaus**
**Plate Schweitzer Zounek**
**Patentanwälte**
**Rheingaustrasse 196**
**65203 Wiesbaden (DE)**

(54) **TRENNFOLIE FÜR TIEFDRUCKANWENDUNG**

(57)   Die vorliegende Erfindung betrifft biaxial orientierte Polyesterfolien, die auf mindestens einer Seite eine Polyolefinwachs Trennbeschichtung aufweisen als Trennfolie zum Auftragen von dünnen Polyacrylatschichten aus organischen Lösemitteln mittels eines Druckverfahrens. Die Erfindung betrifft weiterhin ein Verfahren zur Herstellung solcher Folien sowie deren Verwendung.

**EP 3 587 480 A2**

## Beschreibung

Die Erfindung betrifft eine weichablösende beschichtete Trennfolie aus Polyester zum Auftragen von dünnen Polyacrylatschichten aus organischen Lösemitteln mittels eines Druckverfahrens, sowie ein Verfahren zu ihrer Herstellung und ihrer Anwendung.

## Stand der Technik

Polyesterfolien, besonders biaxial-gestreckte Polyesterfolien, die zum überwiegenden Anteil aus Polyethylenterephthalat (im Folgenden PET) bestehen, eignen sich sehr gut als ablösbare Trennfolien zum Auftragen (Casting) von dünnen Schichten von Polymeren (z.B. Polyvinylchlorid, Polyacrylate) aus organischen Lösemitteln. Bei diesem Prozess erfolgt die Aushärtung der Polymere typischerweise durch Verdampfung des Lösungsmittels und Trocknung der Polymerschicht bei Temperaturen unter 200°C auf einer Roll-to-Roll-kontinuierlichen Anlage. Die Trennfolie wird anschließend von der getrockneten Polymerschicht mechanisch abgelöst. Aufgrund der hohen Steifigkeit und der Oberflächenbeschaffenheit des Polyestersubstrats erreicht man die Trennung in einer einfachen Weise und ohne Oberflächendefekte. Die abgezogene Trennfolie kann in dem Castingprozess mehrfach wiederverwendet werden. Beispiele dieses Verfahrens sind z.B. Casting von Dekorschichten für verschiedene industrielle Anwendungen (Automobil-, Möbel-, Maschinenindustrien u.a.).

Besonders dünne und präzise Polymerschichten (Trockendicke von einigen hundert Nanometer) aus Polyacrylat-basierten Lacken für Werbe- und Verpackungsindustrien können mittels eines Druckverfahrens auf Hochgeschwindigkeitsanlagen effizient aufgetragen werden. EP2172347, EP2163394, WO2016150681 und WO2017021461 beschreiben den Aufbau und die Druckverfahren zur Herstellung von mehrschichtigen Transferfolien für die Kaltprägung, die aus einer bei Raumtemperatur weich ablösbaren Trennfolie und einer Transferlage mit Dekor bestehen. Die Dekorschicht in der Transferlage ist auf der Seite der Trennfolie mit einer mikrometerdicken Schutzlackschicht aus Polyacrylaten versehen. Die Qualität dieser Oberfläche nach der Entfernung der Trennfolie ist von besonderem Interesse: Die Ablösung der Trennfolie darf zu keinen Beschädigungen der Transferlage bzw. submikrometerdicken Dekorschicht führen und muss daher mit konstanten und sehr niedrigen Kräften erfolgen. Aufgrund der chemischen Ähnlichkeit führt das Auftragen von Polyacrylat-basierten Schutzlacken direkt auf die Oberfläche einer Trennfolie aus unbeschichtetem Polyester zu hohen und ungleichmäßigen Ablösekräften. Durch eine Oberflächenbehandlung der Polyesterfolie mit Corona-Verfahren kann keine Verbesserung der Ablösekräfte erzielt werden.

WO2007048563 und WO2017102744 beschreiben die Verwendung einer zusätzlichen Ablöseschicht zwischen der Trennfolie und der Transferlage, die aus einem wachsartigen Material besteht. Des Weiteren beschreibt die DE10349963 den Einsatz eines Esterwachses mit einem Tropfpunkt von 90°C, bei welchem das wachsartige Material erst beim Aufwärmen erweicht und dann die Trennfolie abgelöst werden kann. Diese Methode eignet sich jedoch nicht zum Ablösen der Trennfolie bei Kaltprägung, da diese bei Raumtemperatur stattfindet. WO2017021461 beschreibt die Verwendung einer zusätzlichen Ablöseschicht aus einem Polyacrylatcopolymer, besonders einem wässrigen Polyurethancopolymer, zwischen der Transferlage und der Trennfolie für Kaltprägung. Die Antragung und Trocknung dieser Ablöseschicht erfordern allerdings zusätzliche Prozessschritte.

Alternativ können beschichtete Polyesterfolien als Trennfolien eingesetzt werden. Trennfolien aus Polyester mit Silikonbeschichtung sind bekannt und kommerziell als Schutzfolien für Polyacrylat-basierte Klebschichten verfügbar, z.B. Etiketten, kundenspezifische Hochleistungs-Haftklebebänder (pressure-sensitive adhesives, PSA), Dekorlaminate, Transferklebebänder. Eine Polyacrylat-basierte Klebeschicht trennt sich von diesen Oberflächen mit nur minimaler Kraft. Die Benetzung von silikonisierten Folien mit flüssigen Polyacrylatlacken in organischen Lösemitteln ist jedoch aufgrund der hohen Hydrophobizität der silikonisierten Oberfläche nicht vollständig und daher von Nachteil.

In EP 1186643 wird der Stand der Technik bezüglich der Entwicklung einer Silikonfreien Trennbeschichtung für Polyesterfolien bewertet. Es wird eine Mischung eines Polyolefinwachs und eines venetzbaren Acrylpolymers, die optional auch ein Polysiloxan oder ein Silan enthält, vorgeschlagen. Als das bevorzugte Polyolefinwachs wird ein oxidiertes Homopolymer von Ethylenwachs ME18325 von Michelman genannt. Die Bedeckung von Trennbeschichtungen, die Acrylharze enthalten, mit Polyacrylaten in organischen Lösemitteln führt jedoch wegen der chemischen Ähnlichkeit, zu starken Ablösekräften nach der Trocknung der Lackschicht, was unerwünscht ist.

Im Gegensatz zu einem konventionellen Beschichtungsverfahren für Folien, das auf eine großflächige Bedeckung der Folienoberfläche zielt, findet bei einem Druckverfahren eine punktuelle Benetzung statt. Bei einem Druckverfahren ist es wichtig, eine ausreichende Benetzung der Folienoberfläche mit der polymerhaltigen Lösung im Mikrometermaßstab sicherzustellen. Als Maß der Benetzbarkeit der Folienoberfläche kann eine Messung des Kontaktwinkels benutzt werden.

**Aufgabe**

Es stellt sich daher die Aufgabe, die beschriebenen Nachteile des Standes der Technik zu überwinden. Es soll eine Polyesterfolie bereitgestellt werden, die als Trennfolie zum Auftragen von dünnen Polyacrylatschichten aus organischen Lösemitteln mittels eines Druckverfahrens geeignet ist, wobei sich im Anschluss die getrocknete Polyacrylatschicht mit kleinen und gleichmäßigen Kräften bei Raumtemperatur rückstandsfrei ablösen/abtrennen lassen soll.

**Lösung der Aufgabe**

Gelöst wird die Aufgabe durch die Bereitstellung einer Polyesterfolie die auf mindestens einer Seite mit einer Trennbeschichtung ausgestattet ist (= beschichtete Trennfolie), dadurch gekennzeichnet, dass die Trennbeschichtung das Trocknungsprodukt einer wässrigen Beschichtungsdispersion darstellt und die, auf das Polyestersubstrat aufgetragene, wässrige Beschichtungsdispersion folgende Komponenten umfasst:

(I) 2 bis 10 Gew.-% (bezogen auf das Gesamtgewicht der wässrigen Beschichtungsdispersion), eines Polyolefinwachses mit einem O/C-Verhältnis von 5 bis 15 At.-%, wobei O den Sauerstoffgehalt und C den Kohlenstoffgehalt bezeichnen
und

(II) 0,05 bis 1,4 Gew.-%, (bezogen auf das Gesamtgewicht der wässrigen Beschichtungsdispersion), eines Vernetzers, wobei das Massenverhältnis des Vernetzers und des Polyolefinwachses (I) maximal 1:7 beträgt
und/oder

(III) 0,05 bis 2,5 Gew.-% (bezogen auf das Gesamtgewicht der wässrigen Beschichtungsdispersion), einer silikonhaltigen Komponente, wobei das Massenverhältnis der silikonhaltigen Komponente und des Polyolefinwachses (I) maximal 1:4 beträgt,
und

(IV) restliche, zu 100 Gew.-% fehlende, Gew.-% (bezogen auf das Gesamtgewicht der wässrigen Beschichtungsdispersion) Wasser (als kontinuierliche Phase).

Die beschichtete Folienoberfläche weist folgende Eigenschaften auf:

- Der Benetzungswinkel zwischen der beschichteten Folienoberfläche und dem Lösemittel bzw. dem Lösemittelgemisch, in dem das Polyacrylat zur Auftragung aufgelöst wurde, beträgt < 10°,

- Die freie Oberflächenenergie $\sigma_s$ (total) und deren disperse und polare Anteile $\sigma_{s,D}$ und $\sigma_{s,P}$ der beschichteten Folienoberfläche, die durch die Messung der Kontaktwinkel von drei Standardflüssigkeiten (Wasser, 1,5-Pentandiol, Diiodmethan) auf der beschichteten Trennfolie bestimmt wurden, betragen:

  - Freie Oberflächenenergie $\sigma_s$ (total): 15 bis 30 mN/m, bevorzugt von 20 bis 30 mN/m, besonders bevorzugt von 25 bis 30 mN/m,

  - Disperser Anteil der freien Oberflächenenergie $\sigma_{s,D}$: 15 bis 30 mN/m, bevorzugt von 20 bis 30 mN/m, besonders bevorzugt von 25 bis 30 mN/m,

  - Polarer Anteil der freien Oberflächenenergie $\sigma_{s,P}$: von größer 0 bis 2,0 mN/m, bevorzugt von 0,3 bis 1,5 mN/m, besonders bevorzugt von 0,5 bis 1 mN/m.

Die erfindungsgemäße beschichtete Polyesterfolie weist weiterhin folgende Eigenschaften auf:

- Eine Benetzbarkeit für Polyacrylate in organischen Lösemitteln, die besser oder mindestens vergleichbar mit der von einer nicht beschichteten Polyesterfolie ist
und gleichzeitig

- Eine Ablösekraft bei der Abtrennung der getrockneten Polyacrylatschicht, die kleiner ist als die einer unbeschichteten Polyesterfolie mit der gleichen Foliendicke.

3

Die Benetzbarkeit und die Ablösekraft werden dabei bestimmt wie weiter unten unter "Prüfmethoden" angegeben.

## Beschreibung der Erfindung

Das Polyolefinwachs mit einem O/C-Verhältnis von 5 bis 15 At.-% ist die Komponente, die eine gute Benetzbarkeit der beschichteten Polyesterfolienoberfläche für Polyacrylatdispersionen, die aus organischen Lösemitteln aufgetragen werden, gewährleistet. Ist das O/C-Verhältnis im Polyolefinwachs kleiner als 5 At.-%, wird aufgrund der chemischen Beschaffenheit des Polyolefinwachses und des Polyestersubstrats die Trennbeschichtung keine ausreichende Haftung zum Polyestersubstrat aufweisen. Die Trennbeschichtung löst sich dann beim Abziehen der getrockneten Polyacrylatbeschichtung von dem Polyestersubstrat ab und bleibt auf der Dekoroberfläche. Ist das O/C-Verhältnis im Polyolefinwachs größer als 15 At.-%, wird die Qualität der getrockneten Trennbeschichtung beim Auftragen der Polyacrylatbeschichtung aus organischen Lösemitteln dadurch schlechter, dass das aprotische polare Lösemittel das Polyolefinwachs löst. Bevorzugt sind wässrige Dispersionen von teiloxidierten Wachsen auf Basis von Polypropylen und/oder Polyethylen. Solche Polyolefinwachse sind beispielsweise von Fa. Michelman, Aubange, Belgien (EIF1312.E; teiloxidiertes homopolymeres Polypropylenwachs) oder BYK-Chemie GmbH, Wesel, Deutschland (Aquacer® 1547; anionische Emulsion eines oxidierten Polyethylenwachses) erhältlich. Andere Polyolefinwachse können entweder einzeln, oder in Kombination mit anderen Wachsen wie Paraffinwachsen und/oder Naturwachsen eingesetzt werden. In der Beschichtungsdispersion ist das Polyolefinwachs im Konzentrationsbereich von 2 bis 10 Gew.-%, bevorzugt im Konzentrationsbereich von 2,3 bis 5 Gew.-%, besonders bevorzugt im Konzentrationsbereich von 2,5 bis 4,5 Gew.-% enthalten. Wird das Polyolefinwachs zu mehr als 10 Gew.-% eingesetzt, so führt dies zu einer erhöhten Viskosität der Beschichtungsdispersion und daraus resultierend zu Verarbeitungsproblemen. Wird das Polyolefinwachs zu weniger als 2 Gew.-% eingesetzt, werden die Wirtschaftlichkeit (durch die Notwendigkeit der Verdampfung von einem weit überwiegenden Anteil von Wasser bei der Trocknung der Trennbeschichtung) und die technische Praktizierbarkeit (durch beschränkte Genauigkeit der Feindosierung bei sehr geringen Konzentrationen) verschlechtert.

Zusätzlich wird der Beschichtungsdispersion ein Vernetzer in einer Konzentration von 0,05 bis 1,4 Gew.-%, bevorzugt in einer Konzentration von 0,1 bis 0,7 Gew.-%, und besonders bevorzugt in einer Konzentration von 0,3 bis 0,6 Gew.-%, zugesetzt. Durch Selbstvernetzung gewährleistet der Vernetzer eine feste Konsistenz der Trennbeschichtung und vermindert die Gefahr einer partiellen Übertragung des Polyolefinwachses von der Trennbeschichtung auf die Rückseite der aufgewickelten Folie (Abklatsch). Des Weiteren verbessert der Vernetzer die Stabilität der getrockneten Trennbeschichtung gegen organische Lösemittel bei der Auftragung der Polyacrylatlösung. Der Vernetzer wird der Beschichtungsdispersion (zum Polyolefinwachs) in einem Massenverhältnis von maximal 1:7 (Vernetzer:Polyolefinwachs) zugesetzt. Bei Massenverhältnissen des Vernetzers zu dem Polyolefinwachs, die größer als 1:7 sind, wird die beschichtete Folienoberfläche nicht die erfindungsgemäßen Benetzungswinkel, bzw. Oberflächenenergien, erreichen. Bei Polyolefinwachsen, die ohne die Verwendung eines Vernetzers nur zu einem geringen Abklatsch neigen, hat es sich als günstig erwiesen, die Konzentration des Vernetzers an der unteren Grenze des erfindungsgemäßen Bereichs (0,05 bis 0,1 Gew.-%) zu orientieren. Bevorzugt sind Vernetzer, die bei den Fixiertemperaturen der Folienherstellung (typischerweise 190-240°C) selbst vernetzen. Besonders bevorzugt sind der Oxazolin-basierte Vernetzer wie z.B. Epocros® WS-700 von Nippon Shokubai Co. Ltd., Osaka, Japan. Der Vernetzer kann auch ein hydrolisierbares Silan sein, wie z.B. Xiameter® OFS-6020 von Dow Corning S.A., Seneffe, Belgien. Weiterhin können Melamin-basierte Vernetzer wie Cymel® 303 LF von Cytec Industries B.V., Vlaardingen, Niederlande eigesetzt werden. Bei Verwendung von Melaminbasierten Vernetzern hat es sich als günstig erwiesen, die Vernetzerkonzentration an der unteren Grenze des erfindungsgemäßen Bereichs (0,05 bis 0,1 Gew.-%) zu orientieren, da ein hoher Melamin-Gehalt (Stickstoffanteil) zu einer Vergilbung des Folieneigenregenerats führen kann. Wenn eine silikonhaltige Komponente eingesetzt wird, kann auch auf den Vernetzer verzichtet werden.

Zusätzlich oder alternativ zu dem Vernetzer wird der Beschichtungsdispersion eine silikonhaltige Komponente zu 0,05 bis 2,5 Gew.-%, bevorzugt zu 0,1 bis 1,2 Gew.-% und besonders bevorzugt zu 0,3 bis 1,1 Gew.-% zugesetzt. Diese wirkt sich bei einigen lösemittelbasierten Acrylatsystemen positiv auf die Ablösbarkeit der beschichteten Trennfolie von der getrockneten Polyacrylatschicht (dem getrockneten Acrylatsystem) aus. Die silikonhaltige Komponente wird bevorzugt in wässrig dispergierter Form eingesetzt. Dabei eignet sich besonders eine wässrige Emulsion synthetischer Harze und Siloxane, die 3-(Polyoxyethylen)propyl-heptamethyl-tri-siloxan als grenzflächenaktive Substanz enthält und die kommerziell z.B. von Jost Chemicals GmbH, Lauterbach, Deutschland (Aqua Release® 470 V67) verfügbar ist. Andere Siloxane, die Methylvinylsiloxan- und Methylwasserstoffsiloxangruppen enthalten, können ebenfalls entweder einzeln oder als Gemisch eingesetzt werden. Die silikonhaltige Komponente wird der Beschichtungsdispersion (zum Polyolefinwachs) in einem Massenverhältnis von maximal 1:4 (silikonhaltige Komponente: Polyolefinwachs) zugesetzt. Bei Massenverhältnissen der silikonhaltigen Komponente zu dem Polyolefinwachs, die größer als 1:4 sind, wird eine vollständige Benetzung der Folienoberfläche mit Polyacrylaten in organischen Lösemitteln nicht erreicht. Bei Acrylatsystemen, bei welchen das Polyolefinwachs zu einer ausreichenden Ablösebarkeit der getrockneten Acrylatbeschichtung führt, kann auch auf die silikonhaltige Komponente verzichtet werden.

Die Dispersion, deren Trocknungsprodukt die Trennbeschichtung bildet, wird bevorzugt durch eine wässrige Dispersion dargestellt. Die einzelnen Komponenten der Beschichtungsdispersion können zusammen vorgelegt und anschließend dispergiert, oder bereits einzeln vordispergiert vorgelegt und vor Gebrauch gemischt werden. Zur Verbesserung der Dispersionsstabilität und/oder der Löslichkeit der jeweiligen Komponente kann die zuvor beschriebene wässrige Dispersion einen bestimmten Anteil an Alkoholen (wie Ethanol oder 2-Propanol) und/oder Aminen (wie 2-Diethylaminoethanol) in der kontinuierlichen Phase enthalten. Weitere Additive (z.B. Tenside, Entschäumer, Stabilisatoren, pH-Puffer, u.a.) können der Beschichtungsdispersion zugesetzt werden. Die Gesamtkonzentration der Additive beträgt maximal 2,1 Gew.-% in Bezug auf das Gesamtgewicht der wässrigen Dispersion.

Der Feststoffgehalt der fertigen Beschichtungsdispersion sollte 2,05 bis 16 Gew.-%, bevorzugt 2,5 bis 9 Gew.-%, besonders bevorzugt 3 bis 6 Gew.-% betragen. Bei hohen Feststoffgehalten tendieren die Beschichtungsdispersionen zur Schaumbildung und zur partiellen Übertragung der getrockneten Beschichtung auf die Rückseite der aufgewickelten Folie. Feststoffgehalte in der Beschichtungsdispersion, die kleiner als 2,05 Gew.-% sind, können zu unvollständigen Bedeckungen der Folienoberfläche mit der getrockneten Trennbeschichtung führen.

Die erfindungsgemäße Polyesterfolie mit der Trennbeschichtung ist besonders geeignet zum Auftragen von dünnen Polyacrylatschichten aus organischen Lösemitteln mittels eines Druckverfahrens - z.B. Tiefdruck, Flexo-Druck, Offset-Druck, Inkjet-Druck u.a.. Die Polyacrylatdispersionen enthalten Lösungen von Polyacrylat- (z.B. Polymethylmethacrylat-) und/oder Polyurethancopolymeren in organischen Lösemitteln. Die organischen Lösemittel bestehen beispielsweise aus aprotischen polaren Lösemitteln, idealerweise aus Methylethylketon (im Folgenden MEK) bzw. aus Ethylacetat oder Mischungen daraus. Zusätzlich hat es sich als günstig erwiesen, wenn ein oder mehrere Phasenvermittler, wie Ethanol, Glykole (z.B. n-Propylglykol, 1-Methoxy-2-propylacetat, Milchsäureethylester und dergleichen) und Celluosederivate (z.B. Nitrocelluose, Acetylcelluose und dergleichen) entweder einzeln oder in deren Mischungen, zugegeben werden.

Die erfindungsgemäße Polyesterfolie, auf welche die Trennbeschichtung aufgetragen wird, ist eine ein- oder mehrschichtige biaxial-orientierte Polyesterfolie und besteht zu mindestens 80 Gew.-% aus thermoplastischem Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren (s.u.). In vorteilhafter Weise können für die Polyesterfolie auch Copolymere oder Mischungen oder Blends aus den genannten Homo- und/oder Copolymeren verwendet werden (bei der Angabe der Mengen für die Dicarbonsäuren bildet die Gesamtmenge aller Dicarbonsäuren 100 Mol-%. Analog bildet die Gesamtmenge aller Diole auch 100 Mol-%.).

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C3-C19) Alkandisäuren besonders geeignet, wobei der Alkanteil geradkettig oder verzweigt sein kann. Von heterocyclischen Dicarbonsäuren ist insbesondere 2,5-Furandicarbonsäure zu nennen.

Geeignete aliphatische Diole sind außer Polyethylenglykol beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ geeignet.

Die erfindungsgemäße Polyesterfolie kann auch aus einem Copolyester aufgebaut sein, dessen Dicarbonsäure-Komponenten auf Terephthalsäure abgeleitete Einheiten und eine kleine Menge (< 5 Mol-% an Säureeinheiten) an Isophthalsäure abgeleitete Einheiten zurückzuführen sind. Die Polyesterfolie enthält dann im Wesentlichen ein Polyestercopolymer, das überwiegend aus Terephthalsäure und Isophthalsäure -Einheiten und aus Ethylenglykol-Einheiten (> 97 Mol-% an Dioleinheiten) zusammengesetzt ist.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid, Titanoxid sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die erfindungsgemäß verwendete Polyesterfolie hat eine Dicke von 4,5 $\mu$m bis 500 $\mu$m, bevorzugt von 8 $\mu$m bis 75 $\mu$m, und besonders bevorzugt von 10 $\mu$m bis 36 $\mu$m, und besteht aus mindestens einer oder mehreren Polyesterschichten, wobei die Mehrschichtfolien bevorzugt mittels Koextrusion oder Laminierung zusammengebracht werden. Die Polyesterfolie bzw. jede der Schichten einer Mehrschichtfolie kann herkömmliche Additive wie Antioxidantien, Pigmente, Farbstoffe, Antistatika, UV- und Lichtstabilisatoren, flammhemmende Stoffe, Antiblockmittel und Füllstoffe wie Siliziumdioxid, Kaolin, Calciumcarbonat, Titandioxid, Bariumsulfat und dergleichen, entweder einzeln oder als Mischungen enthalten. Es hat sich als günstig erwiesen, wenn die Polyesterfolie bzw. zumindest die unmittelbar unter der Trennbeschichtung liegende Polyesterschicht einer Mehrschichtfolie, Partikel mit dem mittleren Partikeldurchmesser $d_{50}$ von maximal 5 $\mu$m, bevorzugt maximal 4 $\mu$m, und besonders bevorzugt maximal 3,5 $\mu$m, enthält. Ist der mittlere Partikeldurchmesser $d_{50}$ größer 5 $\mu$m, so wird eine gleichmäßige Bedeckung der mit der Trennbeschichtung ausgestatteten Polyesterfolie mit mikrometerdicken Schichten von Polyacrylatlacken in organischen Lösemitteln nicht erreicht.

Die mit der Trennbeschichtung ausgestattete Polyesterfolie kann auf der von der Trennbeschichtung abgewandten Seite mittels Laminierung, Kaschierung oder mit mechanischen Mitteln auf andere Substrate aufgebracht werden.

**Verfahren zur Herstellung**

Die Herstellung der erfindungsgemäßen Polyesterfolie kann nach bekannten Verfahren erfolgen, wie sie beispielsweise ausführlich in Encyclopedia of Polymer Science and Engineering, Volume 12, Second Edition, 1988, z. B. Seiten 193 - 216, oder PET Packaging Technology, edited by David W. Brooks and Geoff A. Giles, Sheffield Academic Press 2002 (ISBN 0-8493-9786-3), z. B. Seiten 116 - 157 beschrieben sind. Die Beschichtungsdispersion kann auf die unvorbehandelte oder auf vorbehandelte Polyesterfolie aufgetragen werden. Am meisten verbreitet und besonders bevorzugt ist eine herkömmliche Corona-Vorbehandlung zur Verbesserung der Haftung zwischen der Folienoberfläche und der Trennbeschichtung. Corona-Intensitäten, die eine freie Oberflächenenergie der Polyesterfolie $\sigma_s$ (total) von größer als 50 mN/m, bzw. 50-56 mN/m erzeugt, sind typischerweise ausreichend für eine gute Haftung der Beschichtung. Chemische Haftvermittler (Primer) oder Zwischenschichten können auch eingesetzt werden. In-Line-Beschichtung der Polyesterfolie, bei welcher die Beschichtung auf die Folienoberfläche während des Folienherstellungsprozesses und vor der Folienfixierung aufgetragen wird, ist aus wirtschaftlichen Gründen die bevorzugte Beschichtungsmethode. Typischerweise wird die Polyesterfolie nach der CoronaBehandlung zwischen Längs- und Querstreckungen beschichtet. Die Beschichtungsdispersion kann auf die Polyesterfolie ein- oder beidseitig aufgetragen werden. Die Vernetzung der In-Line-aufgetragenen Beschichtungsdispersion findet bevorzugt im Fixierschritt der Folienherstellung typischerweise bei Temperaturen von 190-240°C statt. Zusätzlich zu der In-Line-Beschichtung, kann die Beschichtungsdispersion auch Off-Line (d.h. nach der Herstellung und thermischer Fixierung des Foliensubstrats) aufgebracht werden. Herkömmliche Beschichtungsverfahren beinhalten Antragswalze, Reverse-Roll-Beschichtung, Gravurwalze, Reverse-Gravurwalze, Spiralrakel (Mayer-Bar-Beschichtung), Sprühbeschichtung, Luftbürstenbeschichtung, Meniskus- oder Tauchbeschichtung.

**Prüfmethoden**

SV-Wert (standard viscosity) des Rohstoffes RS PET

Die Standardviskosität in verdünnter Lösung SV wird, angelehnt an DIN 53 728 Teil 3, in einem Ubbelohde Viskosimeter bei (25 $\pm$ 0,05)°C gemessen. Dichloressigsäure (DCE) wird als Lösemittel verwendet. Die Konzentration des gelösten Polymers beträgt 1 g Polymer / 100 ml reines Lösemittels. Die Auflösung des Polymers erfolgt 1 Stunde bei 60°C. Aus der relativen Viskosität ($\eta_{rel} = \eta / \eta_s$) wird der dimensionslose SV-Wert wie folgt ermittelt:

$$SV = (\eta_{rel} - 1) \times 1000$$

O/C-Verhältnis in einem Polvolefinwachs

Kommerzielle Polyolefinwachsdispersion wird mit destilliertem Wasser auf den Feststoffgehalt von 3 Gew.-% verdünnt. 20 ml der wässrigen Dispersion wird in einer Aluminiumschale im Trockenschrank mit Umluft bei 130°C eingetrocknet und in einem Vakuumschrank bei 100°C für 1 Stunde bei < 1 Pa weiter evakuiert. Zur Messung der Elementzusammensetzung der getrockneten Probe wird energiedispersive Röntgenspektroskopie (EDX) mit einem SSD Detektor Apollo von EDAX (Ametek) eingesetzt. Der EDX-Detektor ist in einem FE-SEM Elektronenmikroskop Supra 35 (Zeiss) versehen. Die Messung erfolgt ohne weitere Probenpräparation in Niedervakuum (10-50 Pa) mit dem Einsatz einer 60 $\mu$m-Blende. Die Kathodenspannung beträgt 5 kV und der Probenabstand 10 mm. Die Bestimmung der Elemente erfolgt auf folgenden Linien: Kohlenstoff K$\alpha$(C) = 0,277 keV und Sauerstoff K$\alpha$ (O) = 0,525 keV. Die Elementzusammensetzung wird an 3 zufälligen Probenstellen gemessen und der Mittelwert der Messwerte gebildet. Das O/C-Verhältnis, wobei O den Sauerstoffgehalt in At.-% und C den Kohlenstoffgehalt in At.-% bezeichnen, wird angegeben.

Kontaktwinkelmessung von 3 Standardflüssigkeiten

Als Maß für die chemische Zusammensetzung der Folienoberfläche mit der Trennbeschichtung wird eine statische Kontaktwinkelmessung zwischen der Folienoberfläche und Tangente der Oberflächenkontur eines Flüssigkeitstropfens nach DIN 55660-1,2 mit drei Standardflüssigkeiten und unter Verwendung von folgenden Dosiernadeln durchgeführt:

Tabelle I. Parameter der Oberflächenspannung für drei Standardflüssigkeiten.

| Flüssigkeit | Dosiernadel | Oberflächenspannung [mN/m] | | |
|---|---|---|---|---|
| | | $\sigma_L$ (Total) | $\sigma_{L,D}$ (Dispers) | $\sigma_{L,P}$ (Polar) |
| Destilliertes Wasser | NE44 | 72,8 | 21,8 | 51,0 |
| 1,5-Pentandiol | NE45 | 43,3 | 27,6 | 15,7 |
| Diiodmethan | NE44 | 50,8 | 49,5 | 1,3 |

Zur Messung an horizontal liegenden Tropfen wird das Messgerät DSA-100 der Firma Krüss GmbH mit gewölbtem Probentischadapter ST08 und der Software Advance Ver. 4 eingesetzt. Die Bestimmung findet bei 23°C $\pm$ 1°C und 50 % relative Feuchte auf entladenen und in Standardklima mindestens 16 Stunden vorher konditionierten Folienproben statt. Mittels einer automatisierten Dosierspritze wird ein Tropfen der Standardflüssigkeit mit dem Volumen von 3-5 $\mu$l auf die Folienoberfläche aufgebracht. Über eine Zeit von 20 Sekunden wird alle 5 Sekunden der Kontaktwinkel automatisch bestimmt. Bei jeder Flüssigkeit erfolgt die Messung an 4 Tropfen und aus den 16 Einzelwerten wird der Mittelwert des Kontaktwinkels für jede Flüssigkeit gebildet.
Aus den gemessen Kontaktwinkeln der drei Standardflüssigkeiten werden die freie Oberflächenenergie $\sigma_s$ und deren disperse und polare Anteile $\sigma_{s,D}$ und $\sigma_{s,P}$ nach der Methode von Owens-Wendt-Rabel-Kaelble berechnet - siehe W. Rabel, Einige Aspekte der Benetzungstheorie und ihre Anwendung auf die Untersuchung und Veränderung der Oberflächeneigenschaften von Polymeren. In: Farbe und Lack 77, 10 (1971), Seiten 997-1005. Die für die Berechnung notwendigen Werte der Oberflächenspannung $\sigma_L$ und deren disperse und polare Anteile $\sigma_{L,D}$ und $\sigma_{L,P}$ sind für die drei Standardflüssigkeiten in Tabelle I angegeben.

Kontaktwinkel des reinen Lösemittels oder Lösemittelgemisches

Die Messung erfolgt nach der gleichen Vorgehensweise wie bei der Kontaktwinkelmessung von 3 Standardflüssigkeiten nur mit Verwendung einer manuellen 2 ml-Dosierspritze (Omnifix, B. Braun Melsungen AG) mit der Dosiernadel NE44. Das Tropfenvolumen beträgt 3-5 $\mu$l. Die Software wird so programmiert, dass der Kontaktwinkel alle 29 ms innerhalb von 3 Sekunden nach dem Anlegen des Tropfens automatisch bestimmt wird (103 Messpunkte). Die Messung wird an 3 Tropfen durchgeführt und der Mittelwert der Messwerte gebildet. Die Wiederholbarkeit der Kontaktwinkelmessung ist typischerweise besser als $\pm 0,5°$. Instabile und schlecht wiederholbare Messwerte des Kontaktwinkels deuten auf eine Reaktion zwischen dem Lösemittel und der Trennbeschichtung. Bei sehr kleinen Kontaktwinkeln unter 5° kann je nach der Beschaffenheit der Oberfläche und der Schnelligkeit des Tropfenanlegens eine vollständige Benetzung der Oberfläche ohne Tropfenbildung (Spreiten) stattfinden. In diesen Fällen wird die Messung wiederholt.

Abklatsch der getrockneten Trennbeschichtung

Um den Transfer der getrockneten Trennbeschichtung auf die Rückseite der unter Zugspannung aufgewickelten Folie zu prüfen, wird eine Messung des Abklatschspektrums der Beschichtung mit einem ATR/FTIR-Spektrometer Frontier (Perkin Elmer) mit der Software Spectrum Ver. 10.4.2 durchgeführt. Die beschichtete Seite der zu messenden Folie ist mit Hilfe des drehbaren Stempels (Aufsatzspitze L120-2049) auf den ATR-Kristall angepresst. Der Anpressdruck beträgt 80 (Einheiten in der Software Spectrum). Die Folienprobe wird anschließend entfernt und das Spektrum des auf dem ATR-Kristall hinterlassenen Abklatsches im Wellenzahlenbereich 650 - 4000 cm$^{-1}$ gegen Luft gemessen. Das Messergebnis wird nach der Intensität des Abklatschspektrums in drei Kategorien klassifiziert:

- kein Abklatsch = das dekadische Absorptionsmaß des höchsten Peaks im Abklatschspektrum ist kleiner als $5 \cdot 10^{-4}$,

- schwacher Abklatsch = das dekadische Absorptionsmaß des höchsten Peaks im Abklatschspektrum liegt zwischen $5 \cdot 10^{-4}$ und $1,5 \cdot 10^{-3}$,

- starker Abklatsch = das dekadische Absorptionsmaß des höchsten Peaks im Abklatschspektrum ist größer als $1,5 \cdot 10^{-3}$.

Benetzbarkeit der Polyacrylatbeschichtung

Eine 27,5 Gew.-% Lösung von Polymethylmethacrylat (Elvacite 2008, Lucite International, Newton Aycliffe, UK) in MEK wird mittels eines 5 $\mu$m-Spiralrakels auf die getrocknete Trennbeschichtung der Polyesterfolie aufgebracht. Die Trocknung der Polyacrylatschicht erfolgt durch Aufwärmung der beschichteten Folie für 30 Sekunden im Trockenschrank bei 150°C. Die getrocknete Polyacrylatbeschichtung wird anschließend auf optische Defekte visuell untersucht und das Ergebnis in drei Kategorien klassifiziert:

- Gut = vollständige und homogene Benetzung, keine sichtbaren Defekte,

- Mittelmäßig = Beschichtung weist optische Inhomogenitäten (z.B. Streifen, Tropfen, Aggregate) auf,

- Schlecht = unvollständige Benetzung, unbeschichtete Stellen sind erkennbar.

Zur besseren Erkennbarkeit der Benetzungsqualität und der Ablösung wird in die Polyacrylatlösung 1 Gew.-% des Farbstoffes Paliogen Red Violet K5411 oder Heliogen Green K 9360 (beide BASF SE Ludwigshafen) zugegeben.

Messung der Ablösekräfte

Ein 10 cm langer Streifen des Klebebands tesa® 7475 PV02 (Tesa SE, Deutschland) mit der Breite von 25 mm wird auf die beschichtete Seite der mit der getrockneten Polyacrylatbeschichtung versehenen Trennfolie mit Hilfe einer 2 kg schweren FINAT Standard-Anpressrolle (FINAT Technisches Handbuch: Testmethoden, 8. Auflage, den Haag; 2009, S. 73) ohne zusätzlichen Druck, blasen- und faltenfrei aufgeklebt. Nach einer Wartezeit von 30 Minuten wird die Ablösekraft der Trennfolie von der Polyacrylatbeschichtung im Kontakt mit dem Klebeband mit dem Peeltester TL-2200 (Imass Inc., Accord, MA, USA) in einer 180°-Konfiguration ("T-Peel") gemessen. Die Messgeschwindigkeit beträgt 30 cm/min. Nach einer Anlaufzeit von 2 s werden ca. 200 Messwerte der Ablösekraft innerhalb einer Messzeit von 20 s automatisch gesammelt und gemittelt. Der Verlauf der Ablösekräfte wird visuell beurteilt. Eventuelle sprunghafte Änderungen der Ablösekraft innerhalb der Messzeit reflektieren sich in einem hohen Wert der Standardabweichung RMS. Die Messung wird als 6-fach-Bestimmung durchgeführt und die Mittelwerte der Ablösekraft und der Standardabweichung RMS in [g/25 mm] angegeben.

Die Messergebnisse für die jeweiligen Folienmuster mit der Trennbeschichtung werden mit dem Standard (unbeschichtete biaxial orientierte PET-Folie RNK 12-ohne Corona-Vorbehandlung) - Vergleichsbeispiel 1 verglichen und in folgenden Kategorien klassifiziert:

- Sehr gut = Ablösekraft < 5 g/25 mm und Standardabweichung RMS < 2 g/25 mm

- Gut = Ablösekraft 5 - 10 g/25 mm und Standardabweichung RMS < 3 g/25 mm

- Mittelmäßig = Ablösekraft 5 - 10 g/25 mm und Standardabweichung RMS = 3 - 4 g/25 mm

- Schlecht = Ablösekraft > 10 g/25 mm und Standardabweichung RMS > 4 g/25 mm.

Ablösbarkeit der Trennfolie

Nach der Messung der Ablösekraft wird die Ablösefläche auf der Trennfolie visuell untersucht und das Ergebnis in drei Kategorien klassifiziert:

- Vollständig = eine vollständige Trennung der Polyesterfolie von der Polyacrylatschicht, keine Rückstände der Polyacrylatschicht auf der Polyesterfolie sind erkennbar,

- Teilablösung = eine unvollständige Trennung der Polyesterfolie von der Polyacrylatschicht,

- Keine Ablösung = keine Trennung der Polyesterfolie von der Polyacrylatschicht.

**Beispiele**

Verwendete Rohstoffe

RS_PET = Polyethylenterephthalat (PET), Typ PET 4004 (Hersteller: Invista Resins & Fibres GmbH, Deutschland), SV-Wert = 870; Ethylenterephthalatgehalt ca. 99 Mol-%. Ohne Additive.

MB = Masterbatch aus 98,5 Gew.-% PET 4004 und 1,5 Gew.-% amorphem $SiO_2$, Typ Sylobloc 46 (Hersteller: Grace GmbH, Worms, Deutschland); mittlerer Partikeldurchmesser $d_{50}$ laut Datenblatt 2,9 - 3,5 $\mu$m.

Herstellung der Trennfolie

Es wurde eine koextrudierte, biaxial orientierte (im Folgenden bo-), dreischichtige Polyesterfolie mit ABA-Struktur hergestellt, wobei die Basisschicht (B) aus dem Rohstoff RS_PET und die beiden Deckschichten aus einem Rohstoffgemisch aus 99 Gew.-% RS_PET und 1 Gew.-% MB bestanden. Der Rohstoff RS_PET der Basisschicht (B) wurde in einem Zweischneckenextruder mit Entgasung (Hauptextruder) aufgeschmolzen. Die Rohstoffmischung (RS_PET und MB) der Deckschichten (A) wurde jeweils in einem Zweischneckenextruder mit Entgasung (Coextruder) aufgeschmolzen. Die Schmelzeströme wurden in einer Flachdüse zusammengeführt und auf einer Kühlwalze zu einer amorphen Folie verfestigt, danach über ein Rollenstreckwerk bei 110°C und einem Streckverhältnis von 3,5:1 längsgestreckt. Die längsgestreckte Folie wurde in einer Corona-Anlage (Enercon Industries) mit der Intensität von 6 W•min/m$^2$ mit Corona behandelt. Anschließend wurde die längsgestreckte Folie auf der Corona-behandelten Folienseite mittels einer Reverse-Gravurwalze mit der wässrigen Dispersion der Trennbeschichtung beschichtet. Der Nassantrag betrug 2,7 g/m$^2$. Die einseitig beschichtete längsgestreckte Folie wurde mittels eines Kluppenrahmens bei 110°C und einem Querstreckverhältnis von 3,8:1 quergestreckt, bei 230°C für 5 s thermofixiert und dann aufgerollt. Die wässrige Beschichtung auf der Folie wurde während des Durchlaufs durch den Kluppenrahmen getrocknet und vernetzt. Die Gesamtfoliendicke der Endfolie betrug 12 $\mu$m, wobei die Basisschicht eine Dicke von 10 $\mu$m und die Deckschichten (A) eine Dicke von jeweils 1 $\mu$m aufwiesen. Der Anteil an $SiO_2$-Antiblockmittel (Sylobloc 46) der Deckschichten betrug jeweils 0,1 Gew.-% (bezogen auf die jeweilige Deckschicht).

Beschichtungskomponenten

Tabelle II. Beschichtungskomponenten.

| Komponente | Bezeichnung | Hersteller | Feststoffgehalt laut Datenblatt [%] | O/C-Verhältnis [At.-%] |
|---|---|---|---|---|
| Polyolefinwachs | Aquacer 1547 | BYK-Chemie GmbH | 25 | 6,2 |
| | EIF1312.E | Michelman | 24 | 9,6 |
| Vernetzer | Cymel 303 LF | Cytec Industries B.V. | 98 | |
| | Eastek 1100 | Eastman | 33 | |
| | Epocros WS-700 | Nippon Shokubai | 25 | |
| | Xiameter OFS 6020 | Dow Corning | 98 | |
| Silikonhaltige Komponente | Aqua Release 470 V67 | Jost Chemicals GmbH | 7,5 | |

(fortgesetzt)

| Komponente | Bezeichnung | Hersteller | Feststoffgehalt laut Datenblatt [%] | O/C-Verhältnis [At.-%] |
|---|---|---|---|---|
| Additiv | Entschäumer E | | 100 | |

Vergleichsfolien

RNK 12 - =     Standard unbeschichtete bo-PET Folie (Mitsubishi Polyester Film GmbH), Foliendicke = 12 $\mu$m, keine Corona-Vorbehandlung

RN 23 215KN =     Silikonisierte bo-PET Folie (Mitsubishi Polyester Film GmbH), Foliendicke = 23 $\mu$m

RN 23 2PRK =     Silikonisierte bo-PET Folie (Mitsubishi Polyester Film GmbH), Foliendicke = 23 $\mu$m

Tabelle III. Beispiele - Dosierte Komponentenmengen und Feststoffgehalt der wässrigen Trennbeschichtungsdispersionen.

| Beispiel | Dosierte Komponentenmengen [Gew.-%] | | | | | Feststoffgehalt der wässrigen Trennbeschichtungsdispersion [Gew.-%] |
| --- | --- | --- | --- | --- | --- | --- |
| | Wasser | Polyolefinwachs | Vernetzer | Silikonhaltige Komponente | Additiv | |
| Vergleichsbeispiel 1 (RNK 12 -) | - | - | - | - | - | - |
| Vergleichsbeispiel 2 (RN 23 215KN) | - | - | Silan | Polysiloxan | - | - |
| Vergleichsbeispiel 3 (RN 12 2PRK) | - | - | Silan | Polysiloxan | - | - |
| Vergleichsbeispiel 4 | Entionisiertes Wasser (96,94%) | - | Xiameter OFS 6020 (3,06%) | - | - | 3,0 |
| Vergleichsbeispiel 5 | Entionisiertes Wasser (60%) | - | - | Aqua Release 470 V67 (40%) | - | 3,0 |
| Vergleichsbeispiel 6 | Entionisiertes Wasser (79,29%) | - | Xiameter OFS 6020 (2,04%) | Aqua Release 470 V67 (18,67%) | - | 3,4 |
| Vergleichsbeispiel 7 | Entionisiertes Wasser (85,75%) | - | Eastek 1100 (7,58%) | Aqua Release 470 V67 (6,67%) | - | 3,0 |
| Vergleichsbeispiel 8 | Entionisiertes Wasser (88%) | Aquacer 1547 (12%) | - | - | - | 3,0 |
| Vergleichsbeispiel 9 | Entionisiertes Wasser (89,49%) | Aquacer 1547 (10%) | Xiameter OFS 6020 (0,51%) | - | - | 3,0 |
| Vergleichsbeispiel 10 | Entionisiertes Wasser (82,52%) | Aquacer 1547 (10%) | Xiameter OFS 6020 (0,82%) | Aqua Release 470 V67 (6,67%) | - | 3,8 |
| Vergleichsbeispiel 11 | Entionisiertes Wasser (66,67%) | Aquacer 1547 (20%) | - | Aqua Release 470 V67 (13,33%) | - | 6,0 |
| Beispiel 1 | Entionisiertes Wasser (83,23%) | Aquacer 1547 (10%) | Cymel 303 LF (0,1%) | Aqua Release 470 V67 (6,67%) | - | 3,1 |

(fortgesetzt)

| Beispiel | Dosierte Komponentenmengen [Gew.-%] | | | | | Feststoffgehalt der wässrigen Trennbeschichtungsdispersion [Gew.-%] |
|---|---|---|---|---|---|---|
| | Wasser | Polyolefinwachs | Vernetzer | Silikonhaltige Komponente | Additiv | |
| Beispiel 2 | Entionisiertes Wasser (75,92%) | EIF1312.E (16,67%) | - | Aqua Release 470 V67 (6,67%) | Entschäumer E (0,75%) | 5,3 |
| Beispiel 3 | Entionisiertes Wasser (81,08%) | EIF1312.E (16,67%) | Epocros WS-700 (2%) | - | Entschäumer E (0,25%) | 4,8 |
| Beispiel 4 | Entionisiertes Wasser (62,17%) | EIF1312.E (33,33%) | Epocros WS-700 (4%) | - | Entschäumer E (0,5%) | 9,5 |

Tabelle IV. Beispiele - Eigenschaften der Polyesterfolien mit den Trennbeschichtungen.

| Beispiel | Oberflächenenergie der getrockneten Trennbeschichtung [mN/m] | | | Abklatsch der getrockneten Trennbeschichtung | Kontaktwinkel von reinem MEK [deg] | Folien-benetzbarkeit mit 27,5%-Polyacrylat-lösung in MEK | Getrocknete Polyacrylatbeschichtung (130°C, 30 s) | | | |
|---|---|---|---|---|---|---|---|---|---|---|
| | $\sigma_S$ (Total) | $\sigma_{S,D}$ (Dispers) | $\sigma_{S,P}$ (Polar) | | | | Ablösekraft mit Tesa 7574 [g/25 mm] | RMS [g/25 mm] | Bewertung Ablösekaft mit Tesa 7574 | Ablösequalität |
| Vergleichsbeispiel 1 (RNK 12 -) | 42,7 | 39,7 | 6,2 | kein | 5,7 | gut | 10,4 | 4,2 | schlecht | vollständig * |
| Vergleichsbeispiel 2 (RN 23 215KN) | 12,2 | 9,2 | 3,0 | kein | 15,0 | schlecht | 1,9 | 0,5 | sehr gut | vollständig |
| Vergleichsbeispiel 3 (RN 12 2PRK) | 14,0 | 12,1 | 2,0 | kein | 13,6 | schlecht | 1,7 | 0,4 | sehrgut | vollständig |
| Vergleichsbeispiel 4 | 42,5 | 34,5 | 8,0 | kein | 4,9 | gut | 8,0 | 3,0 | mittelmäßig | vollständig * |
| Vergleichsbeispiel 5 | 30,3 | 14,8 | 15,5 | kein | 10,9 | mittelmäßig | 24 | 1,8 | schlecht | vollständig |
| Vergleichsbeispiel 6 | 13,7 | 11,7 | 2,0 | kein | 12,4 | mittelmäßig | 4,7 | 0,8 | sehr gut | vollständig |
| Vergleichsbeispiel 7 | 29,7 | 27,6 | 2,1 | kein | 6,9 | gut | 1186 | 94 | schlecht | Teilablösung |
| Vergleichsbeispiel 8 | 30,3 | 29,0 | 1,3 | stark | 6,9 | gut | 12 | 4,5 | schlecht | vollständig * |
| Vergleichsbeispiel 9 | 35,3 | 14,1 | 21,3 | stark | 14,8 | schlecht | 67 | 98,9 | schlecht | Teilablösung |
| Vergleichsbeispiel 10 | 25,6 | 21,2 | 4,4 | kein | 12,5 | mittelmäßig | 6,8 | 1,2 | gut | vollständig |
| Vergleichsbeispiel 11 | 20,7 | 19,1 | 1,6 | stark | 6,8 | gut | 5,4 | 1,9 | gut | vollständig |
| Beispiel 1 | 23,1 | 21,7 | 1,4 | kein | 6,6 | gut | 6,3 | 2,3 | gut | vollständig |
| Beispiel 2 | 19,7 | 17,9 | 1,9 | schwach | 6,5 | gut | 3,4 | 0,7 | sehr gut | vollständig |
| Beispiel 3 | 27,4 | 26,7 | 0,8 | kein | 3,5 | gut | 7,4 | 1,4 | gut | vollständig |
| Beispiel 4 | 29,0 | 28,7 | 0,3 | schwach | 5,4 | gut | 2,6 | 0,8 | sehr gut | vollständig |

*) Vollständige Ablösung der Polyacrylatbeschichtung, jedoch sprunghafte Änderung der Ablösekraft

13

EP 3 587 480 A2

**Patentansprüche**

1.  Biaxial orientierte Polyesterfolie, die auf mindestens einer Seite eine Trennbeschichtung aufweist, **dadurch gekennzeichnet, dass** die Trennbeschichtung das Trocknungsprodukt einer wässrigen Beschichtungsdispersion ist, wobei die auf die Polyesterfolie aufgetragene, wässrige Beschichtungsdispersion folgende Komponenten beinhaltet:

    (I) 2 bis 10 Gew.-% (bezogen auf das Gesamtgewicht der wässrigen Beschichtungsdispersion), eines Polyolefinwachses mit einem O/C-Verhältnis von 5 bis 15 At.-%, wobei O den Sauerstoffgehalt und C den Kohlenstoffgehalt des Polyolefinwachses bezeichnet,
    und
    (II) 0,05 bis 1,4 Gew.-% (bezogen auf das Gesamtgewicht der wässrigen Beschichtungsdispersion), eines Vernetzers, wobei das Massenverhältnis des Vernetzers und des Polyolefinwaches maximal 1:7 beträgt
    und/oder
    (III) 0,05 bis 2,5 Gew.-% (bezogen auf das Gesamtgewicht der wässrigen Beschichtungsdispersion), einer silikonhaltigen Komponente, wobei das Massenverhältnis der silikonhaltigen Komponente und des Polyolefinwachses maximal 1:4 beträgt,
    und
    (IV) restliche, zu 100 Gew.-% fehlende, Gew.-% (bezogen auf das Gesamtgewicht der wässrigen Beschichtungsdispersion) Wasser.

2.  Biaxial orientierte, mindestens einseitig beschichtete Polyesterfolie nach Anspruch 1, wobei das Polyolefinwachs ausgewählt ist aus einem oder mehreren verschiedenen Komponenten, bestehend aus: teiloxidierten Wachsen auf Basis von Polypropylen und/oder Polyethylen.

3.  Biaxial orientierte, mindestens einseitig beschichtete Polyesterfolie nach Anspruch 1 oder 2, wobei der Vernetzer ausgewählt ist aus einem oder mehreren verschiedenen Komponenten, bestehend aus: Oxazolin-basierten Vernetzern, hydrolisierbaren Silanen und Melamin-basierten Vernetzern.

4.  Biaxial orientierte, mindestens einseitig beschichtete Polyesterfolie nach einem der Ansprüche 1 bis 3, wobei die silikonhaltige Komponente ausgewählt ist aus einem oder mehreren verschiedenen Komponenten, bestehend aus: synthetischen Harzen und Siloxanen, die 3-(Polyoxyethylen)propyl-heptamethyl-tri-siloxan und/oder Methylvinylsiloxan- und/oder Methylwasserstoffsiloxangruppen enthalten.

5.  Biaxial orientierte, mindestens einseitig beschichtete Polyesterfolie nach einem der Ansprüche 1 bis 4, wobei die wässrige Beschichtungsdispersion weiterhin Alkohole und/oder Amine und/oder Tenside und/oder Entschäumer und/oder Stabilisatoren und/oder pH-Puffer in einer Gesamtkonzentration von bis zu 2,1 Gew.-% (bezogen auf das Gesamtgewicht der wässrigen Beschichtungsdispersion), enthält.

6.  Biaxial orientierte, mindestens einseitig beschichtete Polyesterfolie nach einem der Ansprüche 1 bis 5, wobei der Feststoffgehalt der Beschichtungsdispersion 2,05 bis 16 Gew.-% (bezogen auf das Gesamtgewicht der wässrigen Beschichtungsdispersion) beträgt.

7.  Biaxial orientierte, mindestens einseitig beschichtete Polyesterfolie nach einem der Ansprüche 1 bis 6, **dadurch gekennzeichnet, dass** die Polyesterfolie eine ein- oder mehrschichtige biaxial orientierte Polyesterfolie ist, die zu mindestens 80 Gew.-% (bezogen auf das Gesamtgewicht der unbeschichteten Polyesterfolie) aus thermoplastischem Polyester besteht.

8.  Biaxial orientierte, mindestens einseitig beschichtete Polyesterfolie nach einem der Ansprüche 1 bis 7, **dadurch gekennzeichnet, dass** die Polyesterfolie eine Dicke von 4,5 $\mu$m bis 500 $\mu$m hat.

9.  Biaxial orientierte, mindestens einseitig beschichtete Polyesterfolie nach einem der Ansprüche 1 bis 8, **dadurch gekennzeichnet dass** die einschichtige Polyesterfolie oder mindestens eine Deckschicht der mehrschichtige Polyesterfolie, die unmittelbar unter der aufzubringenden Trennbeschichtung liegt, Partikel mit einem mittleren Partikeldurchmesser $d_{50}$ von maximal 5 $\mu$m enthält.

10. Biaxial orientierte, mindestens einseitig beschichtete Polyesterfolie, **dadurch gekennzeichnet dass:**

    • der Benetzungswinkel zwischen der beschichteten Folienoberfläche und einem darauf aufgetragenen Lösemittel bzw. einem Lösemittelgemisch für ein Polyacrylat < 10° beträgt,
• die freie Oberflächenenergie $\sigma_s$ (total) und deren disperse und polare Anteile $\sigma_{s,D}$ und $\sigma_{s,P}$ der beschichteten Folienoberfläche, die durch die Messung der Kontaktwinkel von drei Standardflüssigkeiten (Wasser, 1,5-Pentandiol, Diiodmethan) auf der beschichteten Folienoberfläche bestimmt wurden,

- $\sigma_s$ (total): 15 bis 30 mN/m,
- $\sigma_{s,D}$ (dispers): 15 bis 30 mN/m,
- $\sigma_{s,P}$ (polar): >0 bis 2,0 mN/m

beträgt.

11. Verfahren zur Herstellung einer biaxial orientierten, mindestens einseitig beschichteten Polyesterfolie nach Anspruch 1 oder 10, wobei man den oder die Polyesterrohstoffe für die ein- oder mehrschichtige Polyesterfolie in einem oder mehreren Extrudern aufschmilzt, durch eine Breitschlitzdüse auf eine Abzugswalze extrudiert, abzieht und dann simultan oder sequenziell längs- und querstreckt, fixiert und dann aufwickelt, wobei vor der Fixierung auf eine oder beide Folienoberflächen in-line die wässrige Beschichtungsdispersion nach Anspruch 1 aufgetragen wird.

12. Verwendung einer biaxial orientierten, mindestens einseitig beschichteten Polyesterfolie nach Anspruch 1 oder 10 als Trennfolie zum Auftragen von dünnen Polyacrylatschichten aus organischen Lösemitteln mittels eines Druckverfahrens.

13. Verwendung einer biaxial orientierten, mindestens einseitig beschichteten Polyesterfolie nach Anspruch 1 oder 10 im Casting von Dekorschichten für Anwendungen in der Werbe-, Verpackung-, Automobil-, Möbel- und/oder Maschinenindustrie.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2172347 A
- EP 2163394 A
- WO 2016150681 A
- WO 2017021461 A
- WO 2007048563 A
- WO 2017102744 A
- DE 10349963
- EP 1186643 A

**In der Beschreibung aufgeführte Nicht-Patentliteratur**

- Encyclopedia of Polymer Science and Engineering. 1988, vol. 12, 193-216
- PET Packaging Technology. Sheffield Academic Press, 2002, 116-157
- **W. RABEL.** Einige Aspekte der Benetzungstheorie und ihre Anwendung auf die Untersuchung und Veränderung der Oberflächeneigenschaften von Polymeren. *Farbe und Lack,* 1971, vol. 77 (10), 997-1005
- FINAT Technisches Handbuch: Testmethoden. 2009, 73